# EUROPEAN PATENT APPLICATION

(11) **EP 4 583 281 A1**
(43) Date of publication of application: **09.07.2025**
(21) Application number: 22960356.8
(22) Date of filing: 30.09.2022
(51) Int. Cl.: H01M 50/244, H01M 50/258, H01M 50/251

(54) **ENERGY STORAGE DEVICE**

(71) Applicant: CONTEMPORARY AMPEREX TECHNOLOGY (HONG KONG) LIMITED, Hong Kong (HK)
(72) Inventor: LIU, Yue, Ningde, Fujian 352100 (CN); PENG, Haoran, Ningde, Fujian 352100 (CN)
(74) Representative: Frick, Robert
(86) International application number: PCT/CN2022/123432
(87) International publication number: WO 2024/065740

(57) **Abstract**

Embodiments of the present application provide an energy storage apparatus, belonging to the technical field of energy storage apparatuses. The energy storage apparatus comprises an energy storage box body and a plurality of batteries, the energy storage box body having a battery compartment, and the battery compartment having an opening in a first direction; the plurality of batteries being provided within the battery compartment, and one battery being arranged in the battery compartment along the first direction. The energy storage apparatus according to the embodiments of the present application has high energy density.

## Description

### TECHNICAL FIELD

The present application relates to the technical field of energy storage apparatuses, and in particular to an energy storage apparatus.

### BACKGROUND

In virtue of the widespread market demand for clean energy, energy storage apparatuses have been widely applied. The market demands that an energy storage apparatus must have high energy density to meet sufficient energy storage needs. Therefore, how to improve the energy density of the energy storage apparatus is an urgent problem.

### SUMMARY OF THE INVENTION

An objective of the present application is to provide an energy storage apparatus with high energy density.

The present application is achieved through the following technical solutions:
In a first aspect, the present application provides an energy storage apparatus. The energy storage apparatus includes an energy storage box body and a plurality of batteries, the energy storage box body having a battery compartment, and the battery compartment having an opening on one side in a first direction; the plurality of batteries being provided within the battery compartment, and one battery being arranged in the battery compartment along the first direction.

For the energy storage apparatus according to an embodiment of the present application, the battery enters the battery compartment via the opening from the first direction. Along the first direction, one battery is arranged in the battery compartment, such that the dimension of the battery in the first direction may be large, e. g. the dimension of the battery in the first direction may be close to that of the battery compartment in the first direction, which can improve a space utilization of the battery compartment in the first direction, enabling, in turn, the energy storage apparatus to have high energy density.

According to some embodiments of the present application, the dimension of the battery compartment in the first direction is L1, and the dimension of the battery in the first direction is L2, with L1 < 2L2 satisfied.

In the above solution, a ratio of the dimension L1 of the battery compartment in the first direction to the dimension L2 of the battery in the first direction satisfies L1 < 2L2, and the dimension of the battery in the first direction may be large to enable high space utilization of the battery compartment in the first direction.

According to some embodiments of the present application, 95% ≤ L2/L1 ≤ 100%.

In the above solution, the ratio of the dimension L1 of the battery compartment in the first direction to the dimension L2 of the battery in the first direction satisfies the above range, the dimension of the battery in the first direction may be large, and the space utilization of the battery compartment in the first direction is high, enabling the energy storage apparatus to have high energy density.

According to some embodiments of the present application, 98% ≤ L2/L1 ≤ 99%.

In the above solution, compared with 95% ≤ L2/L1 ≤ 100%, when 98% ≤ L2/L1 ≤ 99%, it can be ensured that the battery compartment has a high space utilization in the first direction, and it is further facilitated that a fitting space for the battery with other components is reserved, reducing the interference between the battery and other components.

According to some embodiments of the present application, 1500 mm ≤ L1 ≤ 2500 mm.

In the above solution, the dimension of the battery compartment in the first direction satisfies the above range, the battery compartment has a large accommodating space, and the dimension of the battery in the first direction may be large, enabling the energy storage apparatus to have high energy density.

According to some embodiments of the present application, 1600 mm ≤ L1 ≤ 2400 mm.

In the above solution, compared with 1500 mm ≤ L1 ≤ 2500 mm, when 1600 mm ≤ L1 ≤ 2400 mm, on the one hand, the battery compartment can have a large accommodating space, and on the other hand, the battery compartment occupies less space in the first direction, which facilitates layout of the energy storage box body.

According to some embodiments of the present application, 1500 mm ≤ L2 ≤ 2500 mm.

In the above solution, the dimension of the battery in the first direction satisfies the above range to facilitate the battery matching the dimension of the battery compartment in the first direction, enabling the energy storage apparatus to have high energy density.

According to some embodiments of the present application, 1600 mm ≤ L2 ≤ 2400 mm.

In the above solution, compared with 1500 mm ≤ L2 ≤ 2500 mm, when 1600 mm ≤ L2 ≤ 2400 mm, the dimension of the battery in the first direction is more suitable for fitting with the battery compartment, enabling the energy storage apparatus to have high energy density and enabling the fitting of the battery with other components (such as a harness) to be facilitated.

According to some embodiments of the present application, the dimension of the battery compartment in a second direction is W1, the second direction, the first direction, and the height direction of the energy storage box body are mutually perpendicular to each other, and the dimension of the battery in the second direction is W2, with 10% ≤ W2/W1 ≤ 100% satisfied.

In the above solution, a ratio of the dimension of the battery compartment in the second direction to that of the battery in the second direction satisfies the above range, the battery is flexibly provided in the second direction, and different battery configuration manners may be set depending on the dimension of the battery compartment in the second direction.

According to some embodiments of the present application, 10% ≤ W2/W1 ≤ 20%.

In the above solution, compared with 10% ≤ W2/W1 ≤ 100%, when 10% ≤ W2/W1 ≤ 20%, in the second direction, both are enabled that the battery compartment has a high space utilization and that more batteries may be provided.

According to some embodiments of the present application, 700 mm ≤ W1 ≤ 15000 mm.

In the above solution, the dimension of the battery compartment in the second direction satisfies the above range, and the battery compartment may have a large dimension in the second direction so as to accommodate more batteries.

According to some embodiments of the present application, 3000 mm ≤ W1 ≤ 12000 mm.

In the above solution, compared with 700 mm ≤ W1 ≤ 15000 mm, when 3000 mm ≤ W1 ≤ 12000 mm, both are enabled that the battery compartment has the large dimension in the second direction, and that the dimension of the energy storage box body in the second direction Y is not too large.

According to some embodiments of the present application, 700 mm ≤ W2 ≤ 1500 mm.

In the above solution, the dimension of the battery in the second direction satisfies the above range, which facilitates the fitting of the battery with the battery compartment.

According to some embodiments of the present application, 800 mm ≤ W2 ≤ 1200 mm.

In the above solution, compared with 700 mm≤ W2 ≤ 1500 mm, when 800 mm≤ W2 ≤ 1200 mm, the battery can both have high energy density and also easily fit the battery compartment.

According to some embodiments of the present application, the first direction is the width direction of the energy storage box body.

In the above solution, the first direction is the width direction of the energy storage box body, and the battery compartment has the high space utilization in the width direction of the energy storage box body, so as to improve overall space utilization of the battery compartment, enabling, in turn, the energy storage apparatus to have high energy density.

According to some embodiments of the present application, the length direction of the battery is parallel to the first direction.

In the above solution, the length direction of the battery is parallel to the width direction of the energy storage box body, and a length of the battery matches a width of the energy storage box body, which reduces difficulty of processing and manufacturing the battery.

According to some embodiments of the present application, the energy storage apparatus further includes a bracket, the bracket being provided within the battery compartment and the bracket being configured to carry the plurality of batteries.

In the above solution, the bracket has a good supporting effect and facilitates carrying of the battery to achieve fitting of the battery with the battery compartment.

According to some embodiments of the present application, the energy storage box body also includes a compartment body and a compartment door, the compartment body having the battery compartment, the compartment door being connected to the compartment body, and the compartment door being used to close the opening of the battery compartment.

In the above solution, the compartment door closes the opening of the battery compartment so as to isolate the battery located within the battery compartment from the exterior, facilitating protection of the battery.

According to some embodiments of the present application, the plurality of batteries are arranged in a rectangular array, each row of the rectangular array includes a plurality of batteries arranged along the length direction of the energy storage box body, and each column of the rectangular array includes a plurality of batteries arranged along the height direction of the energy storage box body.

In the above solution, the plurality of batteries are arranged in the rectangular array, which makes reasonable use of a space of the battery compartment, allowing the battery compartment to conveniently accommodate more batteries, and improving the space utilization of the battery compartment.

Additional aspects and advantages of the present application will be set forth in part in the description which follows, and in part will be obvious from the description which follows, or may be learned by practice of the present application.

The above description is only an overview of the technical solutions of the present application. In order to better understand the technical means of the present application and thus implement them according to the contents of the specification, and in order to make the above and other objectives, features and advantages of the present application more obvious and understandable, the following is the Detailed Description of the present application.

### DESCRIPTION OF DRAWINGS

To more clearly describe the technical solutions of the embodiments of the present application, the drawings to be used in the embodiments will be briefly introduced below, and it should be understood that the following drawings only show certain embodiments of the present application, and therefore should not be considered as limiting the scope of the present application. For those of ordinary skills in the art, other relevant drawings may also be obtained based on these drawings without creative efforts.
FIG. 1 is a structural schematic diagram of an energy storage apparatus according to some embodiments of the present application;
FIG. 2 is a cross-sectional view of an energy storage apparatus according to some embodiments of the present application;
FIG. 3 is a structural schematic diagram of a battery according to some embodiments of the present application;
FIG. 4 is a schematic diagram of fitting of a bracket with a compartment body according to some embodiments of the present application;
and FIG. 5 is a schematic diagram of fitting of a battery with a bracket according to some embodiments of the present application.

In the drawings, the figures are not drawn to the actual scale.

Description of numerals: 100, energy storage apparatus; 10, energy storage box body; 11, compartment body; 111, support frame body; 12, compartment door; 13, battery compartment; 131, opening; 20, battery; 30, bracket; 40, control box.

### DETAILED DESCRIPTION

Implementations of the present application are described in further detail below in conjunction with the drawings and embodiments. The following detailed description of the examples and the drawings are used to illustrate the principles of the present application by way of example, but should not be used to limit the scope of the present application, that is, the present application is not limited to the described examples.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the Specification and Claims of the present application and the aforementioned Description of Drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated.

Reference to "an embodiment" herein means that a particular feature, structure or characteristic described in conjunction with an embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, unless otherwise expressly and specifically defined, the term "a plurality of" refers to two or more (including two), and similarly, "multiple groups" refers to two or more groups (including two groups), with "multiple pieces" referring to two or more pieces (including two pieces).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skills in the art, the specific meanings of the above terms in the embodiments of the present application can be understood based on specific situations.

The energy storage apparatus is usually of cabinet body structure, the energy storage apparatus includes an energy storage box body and a plurality of batteries, an interior of the energy storage box body has a battery compartment for placing the batteries, the length direction of the battery is usually parallel to the width direction of the energy storage box body, and the batteries enter the battery compartment from the width direction of the energy storage box body.

The relationships between the dimensions of the battery and the specifications of the battery compartment can affect the energy density of the energy storage apparatus. Generally, the battery is small in length, and the dimension of the battery compartment in the width direction of the energy storage box body is larger than the length of the battery. Along the width direction of the energy storage box body, the battery compartment may accommodate two or more batteries, such that the space utilization of the battery compartment in the width direction of the energy storage apparatus is low. However, since the battery has a box body, the larger the number of batteries, the greater the impact on the energy density, resulting in a low energy density of the energy storage apparatus.

In view of this, in order to solve the problem of low energy density of the energy storage apparatus, the inventor has designed a technical solution after in-depth research, in which the battery compartment is provided with an opening in a first direction, the battery enters the battery compartment from the opening along the first direction, the battery compartment is provided with one battery in the first direction to increase the dimension of the battery in the first direction, and the battery compartment can have a high space utilization in the first direction, allowing, in turn, the energy storage apparatus to have high energy density.

The energy storage apparatus disclosed in the embodiments of the present application is used to store energy. For example, a device that needs to use electrical energy requires an apparatus to store electrical energy.

For the convenience of description, the following embodiments are illustrated with an energy storage apparatus according to an embodiment of the present application as an example.

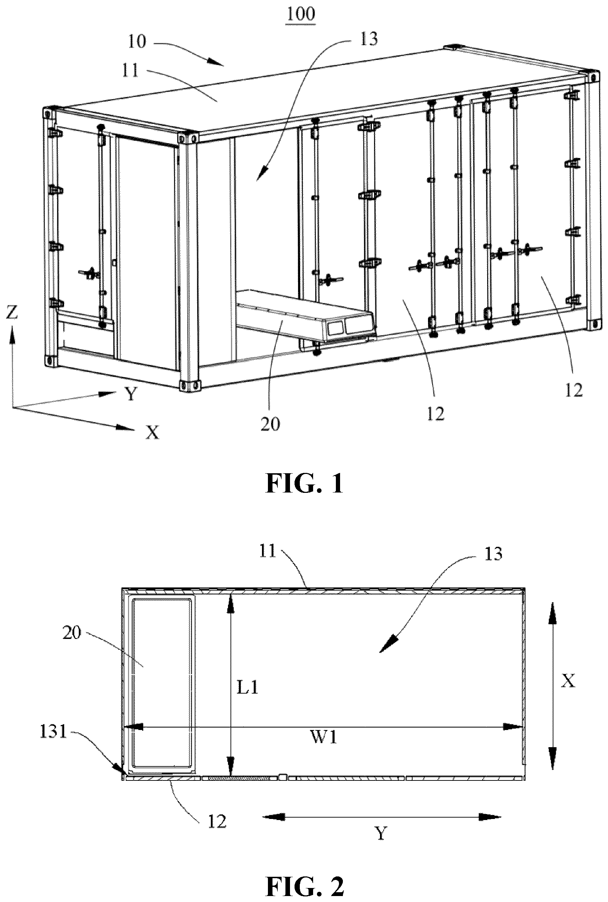

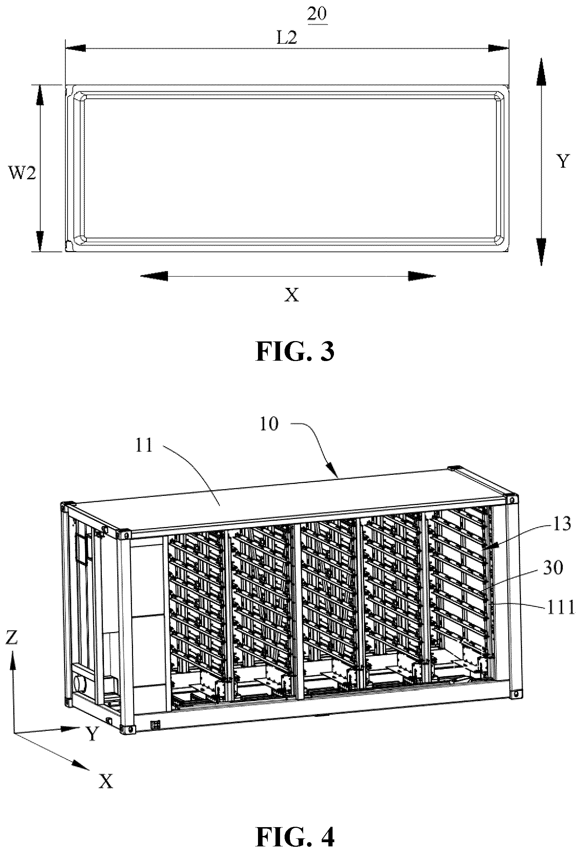

With reference to FIGS. 1 to 3, FIG. 1 is a structural schematic diagram of an energy storage apparatus according to some embodiments of the present application, FIG. 2 is a cross-sectional view of an energy storage apparatus according to some embodiments of the present application, showing a fitted state of a battery and a battery compartment, and FIG. 3 is a structural schematic diagram of a battery according to some embodiments of the present application. According to some embodiments of the present application, the present application provides an energy storage apparatus 100, the energy storage apparatus 100 including an energy storage box body 10 and a plurality of batteries 20. The energy storage box body 10 has a battery compartment 13, and the battery compartment 13 has an opening 131 in a first direction X. The plurality of batteries 20 are provided within the battery compartment 13, and along the first direction X, the battery compartment 13 is provided with one battery 20.

In the figures, a direction which the letter X indicates is the first direction.

For ease of illustration, FIG. 1 shows only one battery 20, and some structures are omitted to show the battery compartment 13.

The energy storage box body 10 may be of cuboid structure, and the first direction may be a width direction or the length direction of the energy storage box body 10.

The energy storage box body 10 is used for an apparatus, e. g. an energy storage prefabricated compartment, an energy storage container, or the like.

The energy storage box body 10 may be made of steel, aluminum, or the like.

A dimension L1 of the battery compartment 13 in the first direction X refers to a distance along the first direction X from the opening 131 of the battery compartment 13 to the inner surface of a compartment wall at one end of the battery compartment 13 facing away from the opening 131.

The battery compartment 13 is a compartment for accommodating the battery 20. The battery 20 can enter the battery compartment 13 along the first direction X from the opening 131 of the battery compartment 13.

The battery compartment 13 being provided with one battery 20 along the first direction may be understood as placing one battery 20 into the battery compartment 13 when placing the battery 20 from the opening 131 into the battery compartment 13 along the first direction X. It should be noted that placing the battery 20 into the battery compartment 13 here means placing the battery 20 into the battery compartment the same opening 131 of the battery compartment 13, with the battery compartment 13 accommodating one battery 20 in the first direction.

The battery compartment 13 may have the opening 131 on one side in the first direction X, enabling two energy storage apparatuses 100 to be provided adjacently, and the openings 131 of the battery compartments 13 of the two energy storage apparatuses 100 are provided oppositely to improve the space utilization of the location where the energy storage apparatuses 100 are located.

In some embodiments, the battery compartment 13 may have openings 131 on two sides in the first direction X, and the battery 20 may be placed into the battery compartment 13 or the battery 20 be removed from the battery compartment 13 from two sides in the first direction X.

For the energy storage apparatus 100 according to an embodiment of the present application, the battery 20 enters the battery compartment 13 via the opening 131 from the first direction X. Along the first direction X, the battery compartment 13 is provided with one battery 20, such that the dimension of the battery 20 in the first direction X may be large, e. g. the dimension of the battery 20 in the first direction X may be close to that of the battery compartment 13 in the first direction X, which can improve a space utilization of the battery compartment 13 in the first direction X, enabling, in turn, the energy storage apparatus 100 to have high energy density.

According to some embodiments of the present application, the dimension of the battery compartment 13 in the first direction X is L1, and the dimension of the battery 20 in the first direction X is L2, with L1 < 2L2 satisfied.

The battery 20 is provided within the battery compartment 13, and a relationship between the dimension L1 of the battery compartment 13 in the first direction X and the dimension L2 of the battery 20 in the first direction X satisfies: L1 > L2.

In the above solution, a ratio of the dimension L1 of the battery compartment 13 in the first direction X to the dimension L2 of the battery 20 in the first direction X satisfies L1 < 2L2, and the dimension of the battery 20 in the first direction X may be large to enable high space utilization of the battery compartment 13 in the first direction X.

According to some embodiments of the present application, 95% ≤ L2/L1 ≤ 100%.

The ratio of the dimension L1 of the battery compartment 13 in the first direction X to the dimension L2 of the battery 20 in the first direction X satisfies the above range, and the dimension L2 of the battery 20 in the first direction X may be large, and the space utilization of the battery compartment 13 in the first direction X is high, enabling the energy storage apparatus 100 to have high energy density. If L2/L1 < 95%, after the battery 20 is placed in the battery compartment 13, the battery compartment 13 has a large free space in the first direction X, such that the space utilization of the battery compartment 13 in the first direction X is low, affecting the energy density of the energy storage apparatus 100.

Optionally, L2/L1 may be 95%, 95.5%, 96%, 96.5%, 97%, 97.5%, 98%, 98.5%, 99%, 99.5%, or 100%.

According to some embodiments of the present application, 98% ≤ L2/L1 ≤ 99%.

Optionally, L2/L1 may be 98%, 98.1%, 98.2%, 98.25%, 98.3%, 98.4%, 98.5%, 98.6%, 98.7%, 98.8%, 98.9%, or 99%.

Compared with 95% ≤ L2/L1 ≤ 100%, when 98% ≤ L2/L1 ≤ 99%, it can be ensured that the battery compartment 13 has a high space utilization in the first direction X, and it is further facilitated that a fitting space for the battery 20 with other components is reserved, reducing the interference between the battery 20 and other components.

According to some embodiments of the present application, 1500 mm ≤ L1 ≤ 2500 mm.

Optionally, L1 may be 1500 mm, 1600 mm, 1700 mm, 1800 mm, 1900 mm, 2000 mm, 2100 mm, 2200 mm, 2300 mm, 2400 mm, or 2500 mm.

In the above solution, the dimension L1 of the battery compartment 13 in the first direction X satisfies the above range, the battery compartment 13 has a large accommodating space, and the dimension of the battery 20 in the first direction X may be large, enabling the energy storage apparatus 100 to have high energy density.

According to some embodiments of the present application, 1600 mm ≤ L1 ≤ 2400 mm.

Optionally, L1 may be 1600 mm, 1650 mm, 1700 mm, 1750 mm, 1800 mm, 1850 mm, 1900 mm, 1950 mm, 2000 mm, 2050 mm, 2100 mm, 2150 mm, 2200 mm, 2250 mm, 2300 mm, 2350 mm, or 2400 mm.

Compared with 1500 mm ≤ L1 ≤ 2500 mm, when 1600 mm ≤ L1 ≤ 2400 mm, on the one hand, the battery compartment 13 can have a large accommodating space, and on the other hand, the battery compartment 13 occupies less space in the first direction X, which facilitates layout of the energy storage box body 10.

According to some embodiments of the present application, 1500 mm ≤ L2 ≤ 2500 mm.

Optionally, L2 may be 1500 mm, 1600 mm, 1700 mm, 1800 mm, 1900 mm, 2000 mm, 2100 mm, 2200 mm, 2300 mm, 2400 mm, or 2500 mm.

In the above solution, the dimension of the battery 20 in the first direction X satisfies the above range to facilitate the battery 20 matching the dimension of the battery compartment 13 in the first direction X, enabling the energy storage apparatus 100 to have high energy density.

According to some embodiments of the present application, 1600 mm ≤ L2 ≤ 2400 mm.

Optionally, L2 may be 1600 mm, 1700 mm, 1800 mm, 1900 mm, 2000 mm, 2100 mm, 2200 mm, 2300 mm, or 2400 mm.

In the above solution, compared with 1500 mm ≤ L2 ≤ 2500 mm, when 1600 mm ≤ L2 ≤ 2400 mm, the dimension of the battery in the first direction X is more suitable for fitting with the battery compartment, enabling the energy storage apparatus to have high energy density and enabling the fitting of the battery with other components (such as a harness) to be facilitated.

According to some embodiments of the present application, the dimension of the battery compartment 13 in a second direction Y is W1, the second direction Y, the first direction X, and a height direction Z of the energy storage box body 10 are mutually perpendicular to each other, and the dimension of the battery 20 in the second direction Y is W2, with 10% ≤ W2/W1 ≤ 100% satisfied.

In the figures, a direction which the letter Y indicates is the second direction. The second direction Y may be a length direction or the width direction of the energy storage box body 10.

The dimension W1 of the battery compartment 13 in the second direction Y refers to a distance between inner surfaces of compartment walls at the opposed ends of the battery compartment 13 along the second direction Y. For example, when the inner surface of the compartment wall of the battery compartment 13 is a plane, the distance between the inner surfaces of the two opposed compartment walls of the battery compartment 13 along the second direction Y may be W1.

When W2/W1 = 100%, at a same height position, along the second direction Y, the battery compartment 13 can accommodate only one battery 20.

If W2/W1< 10%, the dimension of the battery 20 in the second direction Y is small, and the battery compartment 13 can accommodate more batteries 20 along the second direction Y. However, since the battery 20 includes a box body and a battery cell provided within the box body, the larger the number of batteries 20, the more space the box body occupies, and more likely the energy density of the energy storage apparatus 100 is affected.

In the above solution, a ratio of the dimension of the battery compartment 13 in the second direction Y to that of the battery 20 in the second direction Y satisfies the above range (10% ≤ W2/W1 ≤ 100%), the battery 20 is flexibly provided in the second direction Y, and different battery 20 configuration manners may be set depending on the dimension of the battery compartment 13 in the second direction Y.

Optionally, W2/W1 may be 10%, 20%, 30%, 40%, 50%, 60%, 70%, 80%, 90%, or 100%.

According to some embodiments of the present application, 10% ≤ W2/W1 ≤ 20%.

Optionally, W2/W1 may be 10%, 11%, 12%, 13%, 14%, 15%, 16%, 17%, 18%, 19%, or 20%.

In the above solution, compared with 10% ≤ W2/W1 ≤ 100%, when 10% ≤ W2/W1 ≤ 20%, in the second direction Y, both are enabled that the battery compartment 13 has a high space utilization and that more batteries 20 may be provided.

According to some embodiments of the present application, 700 mm ≤ W1 ≤ 15000 mm.

Optionally, W1 may be 700 mm, 800 mm, 900 mm, 1000 mm, 1500 mm, 2000 mm, 5000 mm, 10000 mm, or 15000 mm.

If W1 < 700 mm, the dimension of the battery compartment 13 in the second direction Y is small, and the number of batteries 20 that the battery compartment 13 accommodate in the second direction Y is small, affecting the energy density of the energy storage apparatus 100. If W1 > 15000 mm, the dimension of the battery compartment 13 in the second direction Y is large, such that the dimension of the energy storage box body 10 in the second direction Y is too large, making it inconvenient to process and manufacture the energy storage box body.

In the above solution, the dimension of the battery compartment 13 in the second direction Y satisfies the above range (700 mm ≤ W1 ≤ 15000 mm), and the battery compartment 13 may have a large dimension in the second direction Y so as to accommodate more batteries 20.

According to some embodiments of the present application, 3000 mm ≤ W1 ≤ 12000 mm.

Optionally, W1 may be 3000 mm, 4000 mm, 5000 mm, 6000 mm, 7000 mm, 8000 mm, 9000 mm, 10000 mm, 11000 mm, or 12000 mm.

In the above solution, compared with 700 mm ≤ W1 ≤ 15000 mm, when 3000 mm ≤ W1 ≤ 12000 mm, both are enabled that the battery compartment 13 has the large dimension in the second direction Y, and that the dimension of the energy storage box body 10 in the second direction Y is not too large.

According to some embodiments of the present application, 700 mm ≤ W2 ≤ 1500 mm.

If W2 < 700 mm, the dimension of the battery 20 in the second direction Y is small, and the energy density of the battery 20 is low.

If W2 > 1500 mm, the dimension of the battery 20 in the second direction Y is large, and the number of batteries 20 accommodated within the battery compartment 13 is small.

In the above solution, the dimension of the battery 20 in the second direction Y satisfies the above range (700 mm ≤ W2 ≤ 1500 mm), which facilitates the fitting of the battery 20 with the battery compartment 13.

According to some embodiments of the present application, 800 mm ≤ W2 ≤ 1200 mm.

In the above solution, compared with 700 mm≤ W2 ≤ 1500 mm, when 800 mm≤ W2 ≤ 1200 mm, the battery 20 can both have high energy density and also easily fit the battery compartment 13.

In the above embodiment, when 700 mm ≤ W1 ≤ 1500 mm, W2/W1 may be equal to 100%; when W1> 1500 mm, W2/W1 is less than 100%, that is, in the second direction Y, the battery compartment 13 may be provided with a plurality of batteries 20.

According to some embodiments of the present application, the first direction X is the width direction of the energy storage box body 10.

In the above solution, the first direction X is the width direction of the energy storage box body 10, the battery compartment 13 has the high space utilization in the width direction of the energy storage box body 10, and the battery compartment may be provided with many batteries 20 in the length direction of the energy storage box body 10, so as to improve overall space utilization of the battery compartment 13, enabling, in turn, the energy storage apparatus 100 to have high energy density.

According to some embodiments of the present application, the length direction of the battery 20 is parallel to the first direction X.

In the above solution, compared with the length direction of the battery 20 being parallel to the length direction of the energy storage box body 10, the length direction of the battery 20 is parallel to the width direction of the energy storage box body 10, and a length of the battery 20 matches a width of the energy storage box body 10, reducing the difficulty of processing and manufacturing the battery 20.

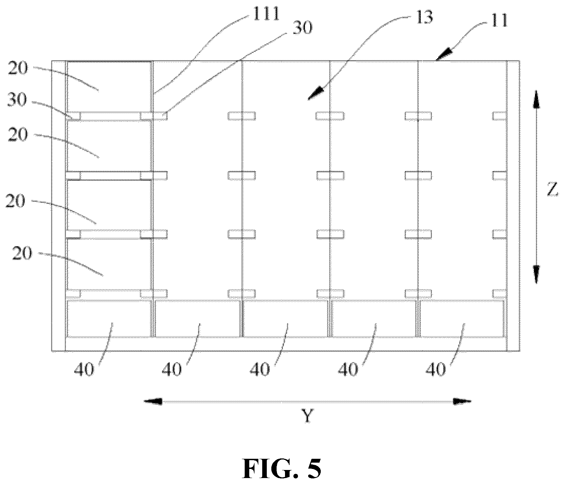

With reference to FIGS. 4 and 5, FIG. 4 is a schematic diagram of fitting of a bracket with a compartment body according to some embodiments of the present application, and FIG. 5 is a schematic diagram of fitting of a battery with a bracket according to some embodiments of the present application. According to some embodiments of the present application, the energy storage apparatus 100 further includes a bracket 30, the bracket 30 being provided within the battery compartment 13 and the bracket 30 being configured to carry a plurality of batteries 20.

The bracket 30 is a component for supporting the battery 20, and the bracket 30 is provided within the battery compartment 13 and may be connected to an inner wall of the compartment body 11.

There may be a plurality of sets of brackets 30, with the plurality of sets of brackets 30 distributed within the battery compartment 13 to divide an internal space of the battery compartment 13 into a plurality of storage units, each storage unit being used to accommodate one battery 20. The number and position of the brackets 30 provided may be set as actually needed and are not limited in the present application.

In the above solution, the bracket 30 has a good supporting effect and facilitates carrying of the battery 20 to achieve fitting of the battery 20 with the battery compartment 13.

According to some embodiments of the present application, the energy storage box body 10 further includes a compartment body 11 and a compartment door 12, the compartment body 11 having the battery compartment 13, the compartment door 12 being connected to the compartment body 11, and the compartment door 12 being used to close an opening 131 of the battery compartment 13.

The compartment door 12 is connected to the compartment body 11, for example, the compartment door 12 is rotationally connectable to the compartment body 11, and the compartment door 12 rotates relative to the compartment body 11 to open or close the opening 131 of the battery compartment 13. In some embodiments, the compartment door 12 may be connected to the compartment body 11 around an axis parallel to the height direction Z of the energy storage box body 10, enabling the compartment door 12 to rotate relative to the compartment body 11.

In the above solution, the compartment door 12 closes the opening 131 of the battery compartment 13 so as to isolate the battery 20 located within the battery compartment 13 from the exterior, facilitating protection of the battery 20.

According to some embodiments of the present application, the plurality of batteries 20 are arranged in a rectangular array, each row of the rectangular array includes a plurality of batteries 20 arranged along the length direction of the energy storage box body 10, and each column of the rectangular array includes a plurality of batteries 20 arranged along the height direction of the energy storage box body 10.

In the rectangular array, a crossing of any row and any column is a storage spot, and each storage spot stores one battery 20.

In an embodiment where the energy storage apparatus 100 includes a bracket 30, the compartment body 11 may include a support frame body 111, there are the plurality of sets of brackets 30 provided, and the plurality of sets of brackets 30 are connected to the support frame body 111, such that the plurality of batteries 20 within the battery compartment 13 are arranged in the rectangular array.

In the above solution, the plurality of batteries 20 are arranged in the rectangular array, which makes reasonable use of a space of the battery compartment 13, allowing the battery compartment 13 to conveniently accommodate more batteries 20, and improving the space utilization of the battery compartment 13.

According to some embodiments of the present application, as shown in FIG. 5, when the plurality of batteries 20 are arranged in the rectangular array, each column of the rectangular array is provided with a control box 40, the control box 40 being electrically connected to the plurality of batteries in this column. The control box 40 is used to control connection or disconnection of a loop connecting the plurality of batteries 20 in this column with external components (such as an electrical device), and to control connection or disconnection of a loop inside each battery 20 in this column, so as to improve the safety of use of the battery 20.

The control box 40 is a box body structure with a control element, the control element may be a PLC (Programmable Logic Controller), and the control box 40 is used to be electrically connected to the battery and external components.

In some embodiments, the control box 40 provided at each column of the rectangular array may be provided below the plurality of batteries 20 in this column. For example, an accommodating space can be provided at the bottom of the battery compartment, and the control box 40 is provided within the accommodating space.

With reference to FIG. 1, according to some embodiments of the present application, there are a plurality of compartment doors 12, and the plurality of doors 12 are rotationally connectable to the compartment body 11. The compartment door 12 is provided along the height direction of the energy storage box body 10. When the plurality of batteries 20 are arranged in the rectangular array, each compartment door 12 may correspond to a plurality of batteries 20 in one row, facilitating the fitting of the batteries 20 with the battery compartment 13.

According to some embodiments of the present application, the battery 20 includes a plurality of battery cells, and at least two battery cells of the plurality of battery cells are connected in parallel.

For example, two battery cells are connected in parallel to make up one unit, and then a plurality of units are connected in series to constitute the battery 20.

As another example, three battery cells are connected in parallel to make up one unit, and then a plurality of units are connected in series to constitute the battery 20.

As yet another example, four battery cells are connected in parallel to make up one unit, and then a plurality of units are connected in series to constitute the battery 20.

The number of units depends on a capacity demand.

It should be noted that a connection between battery cells is an electrical connection to facilitate the transmission of current.

The battery cells within the battery 20 are connected in parallel, which can reduce other components (for example, busbars, circuit boards, etc.) inside the battery 20 to improve the utilization of the internal space of the battery 20, such that the battery 20 has high energy density.

According to some embodiments of the present application, the box body of the battery 20 is made of aluminum, e. g. AL6061. AL6061 is an aluminum alloy material. AL6061 is a heat treatment reinforceable alloy with good formability, weldability, and machinability, also has medium strength, and can maintain good operability after being annealed.

According to some embodiments of the present application, when the box body of the battery 20 is made of aluminum, a manufacturing process of the box body of the battery 20 may be extrusion molding.

According to some embodiments of the present application, a liquid cooling system is provided inside the battery 20, and the liquid cooling system may include a liquid cooling plate and a cooling medium filling within the liquid cooling plate.

Furthermore, a container may be provided inside the battery 20, and the container is used to accommodate the cooling medium and provide the cooling medium to the inside of the liquid cooling plate. Alternatively, the liquid cooling plate is provided with a liquid inlet and a liquid outlet communicating with the outside to facilitate communication with an external container, so as to achieve circulation of the cooling medium within the liquid cooling plate.

According to some embodiments of the present application, with reference to FIGS. 1 to 5, an embodiment of the present application provides an energy storage apparatus 100, the energy storage apparatus 100 including an energy storage box body 10, a plurality of batteries 20, and a bracket 30. The energy storage box body 10 includes a compartment body 11 and a compartment door 12, the compartment body 11 having a battery compartment 13, the battery compartment 13 has an opening 131 only on one side of the energy storage box body 10 in a width direction (a first direction X), the compartment door 12 being rotationally connectable to the compartment body 11, and the compartment door 12 being used to close the opening 131 of the battery compartment 13. The bracket 30 is provided within the battery compartment 13 and connected to the compartment body 11. The plurality of batteries 20 are provided within the battery compartment 13, the bracket 30 carries the plurality of batteries 20, the plurality of batteries 20 are arranged in a rectangular array, each row of the rectangular array includes a plurality of batteries 20 arranged along a length direction (a second direction Y) of the energy storage box body 10, and each column of the rectangular array includes a plurality of batteries 20 arranged along the height direction of the energy storage box body 10. the length direction of each battery 20 is parallel to the width direction of the energy storage box body 10, the dimension of the battery compartment 13 in the first direction X is L1, and the dimension of the battery 20 in the first direction X (that is, a length of the battery 20) is L2, with 98% ≤ L2/L1 ≤ 99% satisfied. In the rectangular array in which the plurality of batteries 20 are arranged, a crossing of any row and any column stores only one battery 20.

For the energy storage apparatus 100 according to the embodiments of the present application, the length of the battery 20 is large, and the space utilization of the battery compartment 13 in the width direction of the energy storage box body 10 is high, such that the energy storage apparatus 100 has high energy density. In addition, the battery compartment 13 has an opening 131 only on one side in the width direction of the energy storage box body 10, and two energy storage apparatuses 100 may be provided back to back, reducing occupied space and improving the space utilization of a position where the energy storage apparatus 100 is placed.

While the present application has been described with reference to the preferred embodiments, various modifications may be made and components thereof may be replaced with equivalents without departing from the scope of the present application. In particular, the technical features mentioned in the various examples can be combined in any manner as long as there is no structural conflict. The present application is not limited to the specific embodiments disclosed herein, but rather includes all technical solutions falling within the scope of the claims.

## Claims

1. An energy storage apparatus, comprising:
an energy storage box body having a battery compartment, the battery compartment having an opening in a first direction; and
a plurality of batteries provided within the battery compartment, wherein one battery is arranged in the battery compartment along the first direction.

2. The energy storage apparatus according to claim 1, wherein the dimension of the battery compartment in the first direction is L1, and the dimension of the battery in the first direction is L2, with L1 < 2L2 satisfied.

3. The energy storage apparatus according to claim 2, wherein 95% ≤ L2/L1 ≤ 100%.

4. The energy storage apparatus according to claim 3, wherein 98% ≤ L2/L1 ≤ 99%.

5. The energy storage apparatus according to any one of claims 2 to 4, wherein 1500 mm ≤ L1 ≤ 2500 mm.

6. The energy storage apparatus according to claim 5, wherein 1600 mm ≤ L1 ≤ 2400 mm.

7. The energy storage apparatus according to any one of claims 2 to 4, wherein 1500 mm ≤ L2 ≤ 2500 mm.

8. The energy storage apparatus according to claim 7, wherein 1600 mm ≤ L2 ≤ 2400 mm.

9. The energy storage apparatus according to any one of claims 1 to 8, wherein the dimension of the battery compartment in a second direction is W1, the second direction, the first direction, and the height direction of the energy storage box body are mutually perpendicular to each other, and the dimension of the battery in the second direction is W2, with 10% ≤ W2/W1 ≤ 100% satisfied.

10. The energy storage apparatus according to claim 9, wherein 10% ≤ W2/W1 ≤ 20%.

11. The energy storage apparatus according to claim 9 or 10, wherein 700 mm ≤ W1 ≤ 15000 mm.

12. The energy storage apparatus according to claim 11, wherein 3000 mm ≤ W1 ≤ 12000 mm.

13. The energy storage apparatus according to claim 9 or 10, wherein 700 mm ≤ W2 ≤ 1500 mm.

14. The energy storage apparatus according to claim 13, wherein 800 mm≤ W2 ≤ 1200 mm.

15. The energy storage apparatus according to any one of claims 1 to 14, wherein the first direction is the width direction of the energy storage box body.

16. The energy storage apparatus according to claim 15, wherein the length direction of the battery is parallel to the first direction.

17. The energy storage apparatus according to any one of claims 1 to 16, wherein the energy storage apparatus further comprises a bracket, the bracket being provided within the battery compartment and the bracket being configured to carry the plurality of batteries.

18. The energy storage apparatus according to any one of claims 1 to 17, wherein the energy storage box body further comprises a compartment body and a compartment door, the compartment body having the battery compartment, the compartment door being connected to the compartment body, and the compartment door being used to close the opening of the battery compartment.

19. The energy storage apparatus according to claim 1, wherein the plurality of batteries are arranged in a rectangular array, each row of the rectangular array comprises a plurality of batteries arranged along the length direction of the energy storage box body, and each column of the rectangular array comprises a plurality of batteries arranged along the height direction of the energy storage box body.
